# FASCICULE DE BREVET EUROPEEN

(11) **EP 1 603 422 B1**
(45) Date de publication et mention de la délivrance du brevet: **07.01.2009**
(21) Numéro de dépôt: 04707255.8
(22) Date de dépôt: 02.02.2004
(51) Int. Cl.: A45D 8/00

(54) **PINCE A CHEVEUX MUNIE D'UN CACHE RESSORT**
HAARSPANGE MIT FEDERABDECKUNG
HAIR CLIP WITH A SPRING CONCEALING DEVICE

(30) Priorité: 04.02.2003 FR 0301245
(43) Date de publication de la demande: 14.12.2005
(73) Titulaire: Siebenmann, 01100 Oyonnax (FR)
(72) Inventeur: PAITA, Piero Paolo, 01101 Oyonnax (FR)
(74) Mandataire: Rhein, Alain
(86) Numéro de dépôt international: PCT/FR2004/050037
(87) Numéro de publication internationale: WO 2004/071234

(56) Documents cités:
- WO-A-98/26686
- US-A- 5 666 702
- US-B1- 6 408 859

## Description

L'invention a trait à une pince à cheveux munie d'un cache ressort, du type comprenant deux branches articulées sur un axe et rappelées l'une vers l'autre par un ressort de torsion enfilé sur ledit axe, ledit ressort étant du type comprenant une partie médiane, qui consiste en un enroulement, et deux brins s'étendant de manière tangente audit enroulement, chacune desdites branches comportant d'une part deux oreilles qui portent ledit axe et entre lesquelles est placé ledit ressort, et d'autre part d'un côté un mors et de l'autre un élément de préhension contre la face interne duquel prend appui l'un des deux brins dudit ressort.

Dans un but esthétique, de telles pinces présentent des formes représentant des objets, des fleurs, des animaux etc. Toutefois, lorsqu'une telle pince est en place les éléments de préhension sont écartés l'un de l'autre, en sorte que le dispositif mécanique, à savoir l'axe et le ressort, est parfaitement visible, ce qui nuit beaucoup à l'esthétique de l'ensemble.

Il a déjà été proposé, notamment dans le document WO 98/26686, de couvrir le ressort et l'axe au moyen d'un capot rendu solidaires directement ou indirectement de l'un des deux éléments de préhension, avec pour inconvénient des difficultés de mise en oeuvre et de montage.

La présente invention a pour but de proposer une pince à cheveux munie d'un cache ressort permettant de remédier à ces divers inconvénients.

La pince à cheveux munie d'un cache ressort selon l'invention comprend deux branches articulées sur un axe et rappelées l'une vers l'autre par un ressort de torsion enfilé sur ledit axe, chacune desdites branches comportant d'une part d'un côté un mors et de l'autre un élément de préhension, et d'autre part deux oreilles qui portent ledit axe et entre lesquelles est place ledit ressort, ce dernier comportant une partie médiane consistant en un enroulement enfilé sur ledit axe, et deux brins qui s'étendent vers l'extérieur de manière tangente audit enroulement, et qui viennent prendre appui chacun sur la face interne d'un des éléments de préhension desdites branches, et ledit cache ressort consistant en une pièce tubulaire prévue apte à être enfilée sur ledit ressort pour recouvrir l'enroulement de celui-ci.

Selon un premier mode de réalisation de la pince à cheveux selon l'invention, la pièce tubulaire se présente sous la forme d'un tube comprenant une fente longitudinale permettant le passage de l'un des brins lors de l'enfilement axial de ladite pièce sur l'enroulement du ressort.

Selon un second mode de réalisation de la pince à cheveux selon l'invention, la pièce tubulaire présente d'une part un diamètre interne légèrement supérieur à celui externe de l'enroulement du ressort afin de permettre un certain jeu entre elle et ledit enroulement, et d'autre part une découpe longitudinale partielle permettant sa mise en place sur ledit enroulement par engagement au préalable dans ladite pièce tubulaire puis dans ladite découpe, l'un des brins dudit ressort.

Selon une autre caractéristique additionnelle de la pince à cheveux selon l'invention, quel que soit le mode de réalisation, chacune des extrémités de la pièce tubulaire présente une échancrure apte à permettre le passage et le mouvement d'un brin du ressort.

Selon une autre caractéristique additionnelle de la pince à cheveux selon l'invention, chacune des échancrures se présente sous la forme d'une découpe d'une bande de matière sur un secteur d'un angle correspondant à celui de la course d'un brin du ressort, lesdites échancrures étant décalées angulairement l'une par rapport à l'autre de manière comparable au décalage du ressort.

On notera que les échancrures ne sont pas indispensables, mais dans le cas d'absence de ces échancrures il est nécessaire que la pièce tubulaire soit d'une longueur inférieure à celle du ressort pour que puissent en échapper les brins de ce dernier.

Les avantages et les caractéristiques de la pince à cheveux selon l'invention, ressortiront plus clairement de la description qui suit et qui se rapporte au dessin annexé, lequel en représente plusieurs modes de réalisation non limitatifs.

Dans le dessin annexé :
- la figure 1 représente une vue schématique en perspective et en éclaté d'un ressort pour pince à cheveux munie d'un cache ressort selon l'invention, dans un premier mode de réalisation.
- la figure 2 représente une vue schématique en perspective du même ressort pour pince à cheveux munie d'un cache ressort selon l'invention dans un second mode de réalisation.

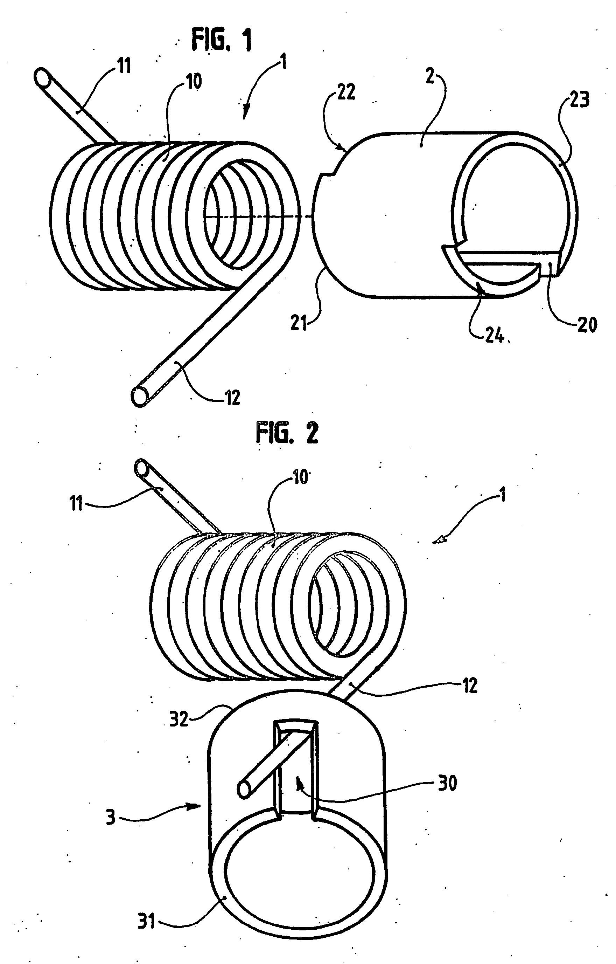

En référence à la figure 1, on peut voir un ressort de torsion 1 pour pince à cheveux, non représentée, lequel comprend de manière connue un enroulement 10 et deux brins 11 et 12, un à chacune des extrémités de l'enroulement, qui s'étendent vers l'extérieur de manière tangente à l'enroulement 10.

De manière connue, la pince, non représentée, selon l'invention, comprend deux branches articulées sur un axe et rappelées l'une vers l'autre par un ressort de torsion 1 enfilé sur cet axe, chacune de ces branches comportant, d'une part, deux oreilles qui portent l'axe et entre lesquelles est placé le ressort 1, et d'autre part d'un côté un mors et de l'autre un élément de préhension contre la face interne duquel prend appui l'un des deux brins 11 et 12 du ressort 1.

Sur la figure on peut voir également un cache ressort selon un premier mode de réalisation, et qui consiste en une pièce tubulaire 2, présentant une fente longitudinale 20.

La pièce tubulaire 2 comporte dans le bord 21 de l'une de ses extrémités une échancrure 22 s'étendant sur un secteur d'un certain angle, et dans le bord 23 de son autre extrémité une échancrure 24 s'étendant également sur un secteur d'un certain angle, et qui est décalée angulairement par rapport à l'échancrure 22.

La pièce tubulaires 2 est destinée à être enfilée axialement sur le ressort 1, la fente 20 permettant le passage du brin 11 ou 12, lors de l'introduction du ressort 1.

La pièce tubulaire 2 est d'un diamètre interne permettant de loger l'enroulement 10 du ressort 1, afin de cacher celui-ci lorsqu'il est en place sur une pince au cheveux. La longueur de la pièce tubulaire 2 est de préférence égale à celle du ressort 1, les échancrures 22 et 24 permettant le passage et le mouvement des brins 11 et 12.

La mise en place de la pièce tubulaire 2 sur le ressort 1 est une opération aisée, et cette pièce tubulaire 2 ne constitue pas une gêne pour la mise en place du ressort 1 sur une pince à cheveux.

En référence maintenant à la figure 2, on peut voir le même ressort 1 associé à cache ressort selon un second mode de réalisation.

Ce cache ressort consiste en une pièce tubulaire 3 dans la paroi duquel est pratiquée longitudinalement une découpe partielle 30, s'étendant d'un bord 31 jusqu'à proximité du bord opposé 32.

La découpe 30 est destinée à permettre la mise en place de la pièce tubulaire 3 sur l'enroulement 10 tout en contournant l'un des deux brins 11 et 12.

En pratique, et comme cela est représenté, la pièce tubulaire 3 est approchée perpendiculairement du ressort 1 par son bord 32, le brin 12 est introduit dans la pièce tubulaire 3 pour s'insérer dans la découpe 30, puis la pièce tubulaire 3 est redresser pour y introduire axialement l'enroulement 10. A cet effet, le diamètre interne de la pièce tubulaire 3 doit de préférence être légèrement supérieur à celui externe de l'enroulement 10 pour faciliter la phase de redressement.

De la même manière que pour le premier mode de réalisation les bords 31 et 32 peuvent comporter des échancrures, non représentées, permettant le passage et la mobilité des brins 11 et 12 du ressort 1, et autorisant ainsi une longueur plus importante de la pièce tubulaire 3, et donc une capacité de masquage plus grande.

Les pièces tubulaires 2 et 3 sont de préférence réalisées dans une matière plastique, laquelle peut être de la même couleur que celle de la pince à équiper.

## Revendications

1. Pince à cheveux munie d'un cache ressort où ladite pince comprend deux branches articulées sur un axe et rappelées l'une vers l'autre par un ressort (1) de torsion enfilé sur ledit axe, ledit ressort (1) comportant une partie médiane, consistant en un enroulement (10), et deux brins (11, 12) s'étendant de manière tangente audit enroulement (10), chacune desdites branches comportant d'une part deux oreilles qui portent ledit axe et entre lesquelles est placé ledit ressort (1), et d'autre part d'un côté un mors et de l'autre un élément de préhension contre la face interne duquel prend appui l'un des deux brins (11, 12) dudit ressort (1), ledit cache ressort consistant en une pièce tubulaire (2 ; 3) apte à être enfilée axialement sur ledit ressort (1) pour recouvrir l'enroulement (10) de celui-ci **caractérisée en ce que** les deux brins (11, 12) viennent prendre appui chacun sur la face interne d'un des éléments de préhension desdites branches.

2. Pince à cheveux selon la revendication 1, **caractérisée en ce que** la pièce tubulaire (2) se présente sous la forme d'un tube comprenant une fente longitudinale (20) destinée à permettre le passage de l'un des brins (11, 12) lors de l'enfilement de ladite pièce sur l'enroulement (10) du ressort (1).

3. Pince à cheveux selon la revendication 1, **caractérisée en ce que** la pièce tubulaire (3) présente d'une part un diamètre interne légèrement supérieur à celui externe de l'enroulement (10) du ressort (1) afin de permettre un certain jeu entre elle et ledit enroulement (10), et d'autre part une découpe (30) longitudinale partielle permettant sa mise en place sur ledit enroulement (10) par engagement au préalable dans ladite pièce tubulaire (3) puis dans ladite découpe (30), de l'un des brins (11, 12) dudit ressort (1).

4. Pince à cheveux selon l'une quelconque des revendications précédentes, **caractérisée en ce que** chacune des extrémités de la pièce tubulaire (2) présente une échancrure (22, 24) apte à permettre le passage et le mouvement d'un brin (11, 12) du ressort (1).

5. Pince à cheveux selon la revendication 4, **caractérisée en ce que** chacune des échancrures (22, 24) se présente sous la forme d'une découpe d'une bande de matière sur un secteur d'un angle correspondant à celui de la course d'un brin (11, 12) du ressort (1), lesdites échancrures (22, 24) étant décalées angulairement l'une par rapport à l'autre de manière comparable au décalage du ressort (1).

## Claims

1. Hair clip provided with a spring cover, wherein said clip comprises two legs articulated about an axis and brought back towards each other by a torsion spring (1) inserted onto said axis, said spring (1) including a median portion consisting of a winding (10), and two strands (11, 12) extending tangentially to said winding (10), each one of said legs including, on the one hand, two lugs bearing said axis and between which said spring (1) is placed and, on the other hand, on one side a jaw and on the other side a gripping member against the inner face of which rests one of the two strands (11, 12) of said spring (1), said spring cover consisting of a tubular part (2 ; 3) capable of being axially inserted onto said spring (1) in order to cover the winding (10) of same, wherein the two strands (11, 12) rest, each, on the inner face of one of the gripping members of said legs.

2. Hair clip according to claim 1, wherein the tubular part (2) is in the form of a tube comprising a longitudinal slot (20) aimed at allowing one of the strands (11, 12) to pass through during the insertion of said part onto the winding (10) of the spring (1).

3. Hair clip according to claim 1, wherein the tubular part (3) has, on the one hand, an inner diameter slightly larger than the outer one of the winding (10) of the spring (1) in order to allow some backlash between same and said winding (10) and, on the other hand, a partial longitudinal cut-out (30) allowing its placing onto said winding (10) by previously inserting one of the strands (11, 12) of said spring (1) into said tubular part (3), then into said cut-out (30).

4. Hair clip according to any of the preceding claims, wherein each of the ends of the tubular part (2) has a notch (22, 24) capable of allowing the passing through and the movement of a strand (11, 12) of the spring (1).

5. Hair clip according to claim 4, wherein each of the notches (22, 24) is in the form of cutting out of a material strip over an angle sector corresponding to that of the travel distance of a strand (11, 12) of the spring (1), said notches (22, 24) being angularly offset with respect to each other in a way comparable to the offset of the spring (1).

## Patentansprüche

1. Haarspange mit einem Federüberzug, wobei die besagte Feder zwei um eine Achse gelenkige Schenkel umfasst, die durch eine auf der besagte Achse aufgesteckte Drehungsfeder (1) zu einander zurückgestellt werden, wobei die besagte Feder (1) einen Mittelteil, der aus einer Windung (10) besteht, und zwei Stränge (11, 12) umfasst, die sich tangential zu der besagten Windung (10) erstrecken, wobei jeder der besagten Schenkel einerseits zwei Ösen, die die besagte Achse tragen und zwischen denen die besagte Feder (1) angebracht ist, und, andererseits, an einer Seite eine Backe und an der anderen Seite ein Greifglied, an dessen Innenfläche einer der beiden Stränge (11, 12) der besagten Feder (1) anliegt, umfasst, wobei der besagte Federüberzug aus einem röhrförmigen Teil (2 ; 3) besteht, der geeignet ist, axial auf die besagte Feder (1) aufgesteckt zu werden, um die Windung (10) derselben zu bedecken, **dadurch gekennzeichnet, dass** sich die zwei Stränge (11, 12) jeweils auf der Innenfläche eines der Greifglieder der besagten Schenkel abstützen.

2. Haarspange nach Anspruch 1, **dadurch gekennzeichnet, dass** der röhrförmige Teil (2) als ein Rohr ausgestaltet ist, das einen Längsschlitz (20) umfasst, der dazu bestimmt ist, den Durchgang eines der Stränge (11, 12) während dem Aufstecken des besagten Teils auf die Windung (10) der Feder (1) zu erlauben.

3. Haarspange nach Anspruch 1, **dadurch gekennzeichnet, dass** der röhrförmige Teil (3), einerseits, einen Innenduchmesser, der geringfügig größer ist als der Aussendurchmesser der Windung (10) der Feder (1), um ein gewisses Spiel zwischen demselben und der besagten Windung (10) zu erlauben, und, andererseits, einen Teilausschnitt (30) in Längsrichtung aufweist, der das Anbringen desselben auf die besagte Windung (10) durch die vorabgehende Einführung eines der Stränge (11, 12) der besagten Feder (1) in den röhrförmigen Teil (3), danach in den besagten Ausschnitt (30) erlaubt.

4. Haarspange nach irgendeinem der vorgehenden Ansprüche, **dadurch gekennzeichnet, dass** jedes der Enden des röhrförmigen Teils (2) eine Einkerbung (22, 24) aufweist, die geeignet ist, um den Durchgang und die Bewegung eines Stranges (11, 12) der Feder (1) zu erlauben.

5. Haarspange nach Anspruch 4, **dadurch gekennzeichnet, dass** jede der Einkerbungen (22, 24) als ein Ausschnitt einer Materialstreife über einen Winkelsektor ausgestalltet ist, der demjenigen des Hubes eines Stranges (11, 12) der Feder (1) entspricht, wobei die besagten Einkerbungen (22, 24) auf mit der Versetzung der Feder (1) vergleichbare Weise zu einander winklig versetzt sind.
